Europäisches Patentamt

European Patent Office

Office européen des brevets

(11) Publication number: **0 105 555**

**B1**

## EUROPEAN PATENT SPECIFICATION

(45) Date of publication of patent specification: **04.06.86**

(51) Int. Cl.⁴: **B 65 G 25/04**

(21) Application number: **83201370.0**

(22) Date of filing: **26.09.83**

(54) **Device for discharging brush bodies one by one from a storage.**

(30) Priority: **04.10.82 BE 2059856**

(43) Date of publication of application:
**18.04.84 Bulletin 84/16**

(45) Publication of the grant of the patent:
**04.06.86 Bulletin 86/23**

(84) Designated Contracting States:
**CH DE GB IT LI**

(56) References cited:
**EP-A-0 040 585**
**US-A-3 524 532**
**US-A-3 651 925**
**US-A-3 785 477**
**US-A-4 199 055**

(73) Proprietor: **G.B. BOUCHERIE, N.V.**
**Stuivenbergstraat 104-141**
**B-8700 Izegem (BE)**

(72) Inventor: **Boucherie, Leonel Polydore**
**Potaardestraat 3**
**B-8810 Roeselare-Rumbeke (BE)**

(74) Representative: **Donné, Eddy**
**M.F.J.Bockstael Arenbergstraat 13**
**B-2000 Anvers (BE)**

Courier Press, Leamington Spa, England.

**Description**

The present invention covers a device for discharging brush bodies one by one from a storage bin or the like according to the preamble of claim 1, operation of this device being independent from the shape and position of the brush bodies within the storage and this device being moreover very simple in construction, as well as most efficient and reliable.

This device is more specifically meant to pick brush bodies one by one from a storage, taking them to an installation for further treatment, more particularly in the first instance to a so-called detection or positioning device.

In certain cases, e.g. when the brush bodies show a particular profile, it is possible however to discharge these brush bodies one by one with the device according to the invention, so that they are already positioned with the side in which the holes for inserting the brush fibres must be or are provided, turned upwards.

In a particular application the device according to the invention will be used for oblong brush bodies, such as toothbrush bodies.

Devices for the removal of parts one by one from a storage bin are already known from the American patent No. 3.785.477 and from the European patent 40585. The devices, which consist of a number of slides which move up and down, either at an angle or not, mounted in a storage bin, have the disadvantage that in the event of there being a large quantity of stored items, the lowest slide moves without effect in this store, thus reducing the number of slides which operate efficiently. The result of this that the sound operation of such a device is threatened and often more than one part is discharged at a time.

Because these devices are not intended to store large quantities of items, the storage bins must be refilled regularly and consequently cannot be used for machines which have to be capable of unattended operation for long periods with an automatic feed of parts which must be removed from the storage bins one by one, as is the case for brush manufacturing machines, for example.

The invention therefore covers a device which does not demonstrate the afore-mentioned or other disadvantages.

This device as specified by the invention mainly consists of a twin compartment storage bin in which at least two forwards and backwards moving slides located below the second compartment raise the brush bodies and remove them from the storage bin; the upper surfaces of these slides slope down towards the discharge opening and are placed so that they increase in height towards the brush body discharge opening. The characteristic of the device is that the second storage bin compartment is preceded by the first compartment, in which a device has been provided for the transfer of a relatively large quantity of brush bodies per stroke from the first compartment into the second. In specific terms, this device consists of a single wide slide which rises and falls. With the objective of demonstrating the caracteristics of the invention more clearly, several approved applications are described below purely as indicative examples with reference to the accompanying drawings to which they relate, in which:

figure 1 is a diagram of the device as specified by the invention;

figure 2 is an enlarged diagram of the part indicated by F2 in figure 1;

figure 3 is an alternative form of the part of the device indicated in figure 2.

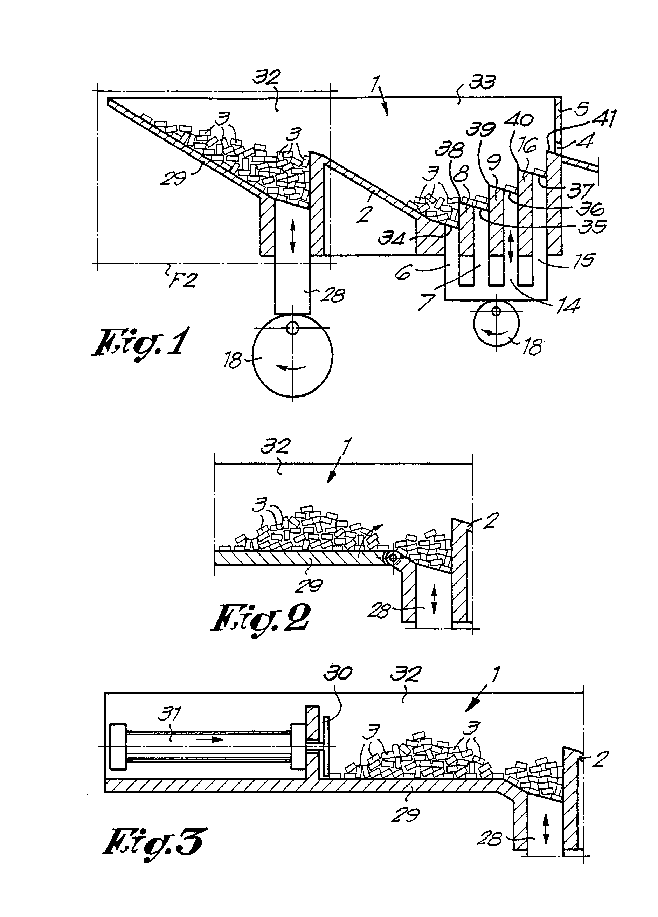

The device as illustrated in figure 1 consists mainly of a twin-compartment storage bin 1 which combines a first compartment 32, in which a very large quantity of brush bodies 3 may be stored and from which a limited quantity of brush bodies may be removed at regular intervals, with a second compartment 33 which receives this limited quantity and from which the afore-mentioned brush bodies 3 are removed one by one.

The first compartment 32, the bottom 29 of which should preferably be a sloping wall, is equipped with a rising and falling single wide slide 28 which transfers a certain quantity of brush bodies 3 per stroke from the first compartment 32 of the storage bin 1 to the second compartment 33 of the storage bin 1. The slide 28 may be driven by any method. In the execution illustrated in figure 1 the slide is driven by means of a cam 18.

The second compartment 33 of the device mainly consists of a bin, the wall 2 of which in this case is constructed at a slope, and the lowest part of this compartment 33 is equipped with the means of raising the brush bodies 3 in stages from the lowest part of the relatively small stock already available in order to discharge the brush bodies 3 through an opening 4 in the wall 5 for further processing, a detection and/or positioning device, for example.

The above-mentioned and in itself already well-known means of raising the brush bodies 3 in stages mainly consists of a number of slides 6—7 and 14—15 of equal width placed one next to the other which may be moved up and down with respect to the brush bodies 3 present in the second compartment 33 of the storage bin 1. There are walls 8, 9, 16 and 17 after each slide, in the direction of movement of the brush bodies 3, on which the brush bodies 3 are placed successively so that they may be placed onto the following slide, which is higher with respect to the previous one, to be discharged ultimately through the opening 4. The upward and downward movement of the slides 6—7 and 14—15 may be achieved by means of a second cam 18, for example.

The above-mentioned slides 6—7 and 14—15 and the walls 8—9 and 16—17 placed after them all have a width which is approximately equivalent to the width of a brush body 3 and the height of the upper surfaces 34—37 of the slides 6—7 and 14—15 increases progressively from the lowest point of the second compartment 33 of the storage bin 1 with respect to a common horizontal level.

As is clearly indicated in figure 1, the upper surfaces 34—37 of the slides 6, 7, 14 and 15 and the upper surfaces 38—41 of the walls 8, 9, 16 and 17 are all inclined so that the brush bodies 3 raised by such slides 6—7 and 14—15 slide under the influence of gravity towards the adjacent wall. During the downward movement of the slides 6—7 and 14—15 the brush bodies 3 slide from the upper surfaces 38—41 of the walls 8—9 and 16—17, likewise under the simple influence of gravity, in order either to be transferred to the following slide or to be discharged through the opening 4.

Due to the slope built into the upper surfaces 34—41 of the slides 11—14 and also of the walls placed immediately after them, the brush bodies 3 are prevented insofar as is possible from falling back from a higher slide and the brush bodies 3 are transferred simply and effectively from a slide to the following wall and from that wall to the following slide.

It is also evident from figure 1 that due to the rising and falling of the slides 6—7 and 14—15, the brush bodies 3 will be discharged one by one with a high degree of accuracy through the afore-mentioned opening 4. This opening 4 may also be formed by the upper edge of the second compartment 33 of the storage bin 1.

It should also be noted that the accuracy with which the brush bodies 3 are discharged one by one from the second compartment 33 of the storage bin 1 due to each upward and downward movement depends on the shape and size of the brush bodies 3, so that in certain cases the device must be adapted to this shape and size.

It is further shown in figure 2 that the first compartment 32 of the storage bin 1 and, more particularly, the wall 5 of this first compartment 2, may be hined in order to simplify the supply to the slide 28 and to facilitate the movement of the brush bodies 3 towards the slide 28 due to the upward movement of the bottom 29.

Figure 3 illustrates an application in which the bin bottom 29 is fixed and for the most part horizontal and the first compartment 32 of the storage bin 1 is equipped with a pusher element 30 which, for example, may be operated by an appropriate pressure cylinder 31 in order to move towards the slide 28.

The examples of the device according to the invention, as illustrated in figures 1—3, further indicate that very large stocks of brush bodies may be processed and, when the device is connected to a brush manufacturing machine, this machine will be able to operate unattended. As already discussed earlier, it may be desirable in certain cases, for example when the brush bodies are of an appropriate shape, for the upper surface 37 of at least slide 15, which discharges the brush bodies 3 from the second compartment 33 of the storage bin 1, to be given a suitable profile so that the brush body 3 is forced to adopt a specific position, such that the side of the brush body 3 in which holes will later be bored or have already been bored will always be uppermost.

Thus a very simple device is obtained which enables brush bodies to be removed from stock one by one whether these brush bodies 3 are specially profiled or not, and at least the last slide 15 before the brush bodies 3 are discharged from the storage bin 1 may be profiled to give the brush bodies 3 a specific orientation.

It is obvious that this device as specified by the invention may also be used for items other than brush bodies.

It is similarly evident that the dimensions and shape of the device are highly dependent on the shape and profiling of the items to be processed or, more specifically, the shape of the brush bodies.

## Claims

1. A device for the removal of pieces such as brush bodies (3) one by one from a storage bin (1) which partly consists of a mechanism equipped with at least two rising and falling slides (6, 7, 14, 15) which lift the pieces and remove them from a storage bin while the upper surfaces of these slides slope down towards a discharge opening (4), with the caracteristic that this device exists in the combination of a first compartment (32) of a storage bin (1) into which is placed a large supply of brush bodies (3); a second compartment (33) of this storage bin (1) which is equipped with the rising and falling slides (6, 7, 14, 15); and a relatively wide slide (28) located under the first compartment (32) of the storage bin (1) which rises and falls and for each stroke transports a specific supply of brush bodies (3) to the second compartment (33).

2. A device for the removal of brush bodies one by one from a store, as specified under claim 1, with the characteristic that the upper surface (37) of at least the last slide (15) in the second compartment (33) of the storage bin (1) which is located adjacent to the discharge opening of the device is profiled, depending upon the shape of the brush bodies (3).

## Patentansprüche

1. Vorrichtung zur Einzelabgabe von Gegenständen, wie Bürstenkörpern o.dgl. (3), aus einem Vorratsbehälter (1), teilweise bestehend aus einem mit wenigstens zwei sich auf- und abwärtsbewegenden Schiebern (6, 7, 14, 15) ausgestatteten Mechanismus für das Heben der betreffenden, Gegenstände und ihre Abgabe aus dem Vorratsbehälter, wobei die Oberseite dieser Schieber unter einer bestimmten Neigung nach einer Abgabeöffnung (4) abfällt, dadurch gekennzeichnet, daß sie im wesentlichen aus einer ersten, einen großen Bürstenkörpervorrat (3) enthaltenden Kammer (32) eines Vorratsbehälters (1), einer mit auf- und abwärtsbewegenden Schiebern (6, 7, 14, 15) ausgestatteten zweiten Kammer (33) des betreffenden Vorratsbehälters (1) und einem verhältnismäßig breiten, unter der ersten Kammer (32) des Vorratsbehälters (1) angeordnet, sich wechselweise auf- und abwärtsbewegenden, jedesmal eine bestimmte Bürstenkörpermenge (3) zur zweiten Kammer (33) des Vorratsbehälters übertragenden Schieber (28), besteht.

2. Vorrichtung zur Einzelabgabe von Bürstenkörpern aus einem Vorratsbehälter gemäß dem Anspruch 1, dadurch gekennzeichnet, daß die obere Seite (37) wenigstens des letzten, in der zweiten Kammer (33) des Vorratsbehälters (1) an der Abgabeöffnung der Vorrichtung anliegenden Schiebers (15) gemäß der Form der betreffenden Bürstenkörper profiliert ist.

## Revendications

1. Dispositif pour décharger successivement des pièces, telles que des corps de brosse (3), d'un magasin (1), qui se compose partiellement d'un mécanisme équipé d'au moins deux régistres (6, 7, 14, 15) susceptibles de se déplacer vers le haut et vers le bas et servant à soulever les pièces et à les enlever d'un magasin, registres dont le côté supérieur descend en pente vers une ouverture de décharge (4), caractérisé en ce qu'il se compose essentiellement d'un premier compartiment (32) d'un magasin (1) chargé d'une importante réserve de corps de brosse (3); d'un deuxième compartiment (33) de ce magasin (1), équipé de registres (6, 7, 14, 15) susceptibles de se déplacer vers le haut et vers le bas; et d'un registre relativement large (28) disposé sous ce premier compartiment (32) dudit magasin (1), qui est susceptible de s'élever et de descendre alternativement de manière à transporter à chaque coup une quantité déterminée de corps de brosse (3) vers ce deuxième compartiment (33).

2. Dispositif pour décharger successivement des corps de brosse d'un magasin selon la revendication 1, caractérisé en ce que le côté supérieur (37) d'au moins le dernier registre (15) dans le deuxième compartiment (33) du magasin (1), qui est adjacent à l'ouverture de décharge du dispositif, est profilé en fonction de la forme des corps de brosse concernés (3).

**Fig.1**

**Fig.2**

**Fig.3**